# EUROPEAN PATENT APPLICATION

(11) **EP 4 814 455 A1**
(43) Date of publication of application: **30.09.2026**
(21) Application number: 26166969.1
(22) Date of filing: 24.03.2026
(51) Int. Cl.: G01K 1/08, H02M 7/00

(54) **POWER SEMICONDUCTOR MODULE**

(30) Priority: 24.03.2025 CN 202520520809 U
(71) Applicant: PN Junction Semiconductor (Zhejiang) Co., Ltd., Ningbo City, Zhejiang Province 315000 (CN)
(72) Inventor: HUANG, Xing, Ningbo City, 315000 (CN)
(74) Representative: Osha BWB

(57) **Abstract**

The present disclosure provides a power semiconductor module that includes a module body, a temperature measurement element, and a plurality of connection terminals. The module body has a first side surface and a second side surface that are opposite to each other. The temperature measurement element is disposed at the module body and configured to monitor a temperature of the module body. The plurality of connection terminals include a first temperature measurement signal terminal, a second temperature measurement signal terminal, and a plurality of auxiliary drive terminals. The first temperature measurement signal terminal and the second temperature measurement signal terminal are both connected to the temperature measurement element. The plurality of auxiliary drive terminals are all connected to the module body. The first temperature measurement signal terminal is disposed on the first side surface. The second temperature measurement signal terminal is disposed on the first side surface or the second side surface. The plurality of auxiliary drive terminals are disposed on the second side surface. Based on the described solution, it helps to increase the electrical clearance and creepage distance between the temperature measurement signal circuit and the main power circuit, thereby enabling the power semiconductor module to be more suitable for application scenarios with high voltage ratings and high operating frequencies.

## Description

### TECHNICAL FIELD

The present disclosure relates to the technical field of semiconductor, in particular to a power semiconductor module.

### BACKGROUND

A temperature measurement element of a power semiconductor module can monitor the temperature of a module body of the power semiconductor module. However, the structure of the power semiconductor module is relatively compact, and a temperature measurement signal terminal of the temperature measurement element is relatively close to an auxiliary drive terminal of the semiconductor chip, making it difficult to meet electrical safety requirements of a client for higher application voltages and higher operating frequencies. Therefore, the client may need to introduce additional electrical isolation measures, which in turn increases application complexity and application cost.

### SUMMARY

The present disclosure provides a power semiconductor module that includes: a module body including a first side surface and a second side surface that are opposite to each other; a temperature measurement element disposed at the module body and configured to monitor a temperature of the module body; and a plurality of connection terminals that include a first temperature measurement signal terminal, a second temperature measurement signal terminal, and a plurality of auxiliary drive terminals. The first temperature measurement signal terminal and the second temperature measurement signal terminal are both connected to the temperature measurement element. The plurality of auxiliary drive terminals are all connected to the module body. The first temperature measurement signal terminal is disposed on the first side surface. The second temperature measurement signal terminal is disposed on the first side surface or the second side surface. The plurality of auxiliary drive terminals are disposed on the second side surface.

In some embodiments, the plurality of connection terminals further include a plurality of power supply terminals.

Each of the plurality of power supply terminals is connected to the module body. The plurality of power supply terminals are disposed on the first side surface. The second temperature measurement signal terminal is disposed on the second side surface.

The first temperature measurement signal terminal is disposed adjacent to one of the plurality of power supply terminals.

A polarity of the power supply terminal adjacent to the first temperature measurement signal terminal and a polarity of the first temperature measurement signal terminal are both negative.

In some embodiments, the plurality of power supply terminals include a direct current positive terminal, a direct current negative terminal, and an alternating current terminal arranged sequentially at intervals. The first temperature measurement signal terminal is disposed adjacent to the direct current negative terminal.

In some embodiments, the plurality of auxiliary drive terminals include a first source auxiliary drive terminal and a second source auxiliary drive terminal. The first source auxiliary drive terminal and the second source auxiliary drive terminal are both connected to the module body and disposed on the second side surface. A polarity of the first source auxiliary drive terminal is positive. A polarity of the second source auxiliary drive terminal and a polarity of the second temperature measurement signal terminal are negative. The second temperature measurement signal terminal is close to the second source auxiliary drive terminal.

In some embodiments, the plurality of connection terminals further include a spare temperature measurement terminal disposed on the second side surface.

The temperature measurement element is connected to the second temperature measurement signal terminal. The temperature measurement element is also connected to the first temperature measurement signal terminal or the spare temperature measurement terminal.

In some embodiments, the module body includes a bottom surface and a top surface that are opposite to each other. The bottom surface and the top surface are each disposed between the first side surface and the second side surface.

Each of the plurality of connection terminals includes a first connection segment, a second connection segment, and a third connection segment connected sequentially. The module body is connected to the first connection segment. The third connection segment extends obliquely from the second connection segment toward a plane in which the bottom surface is disposed in a direction away from the first connection segment.

In some embodiments, an angle between the third connection segment and the plane in which the bottom surface is disposed is not less than 4 degrees and not greater than 7 degrees.

In some embodiments, the plurality of connection terminals further include a plurality of power supply terminals disposed on the first side surface.

In some embodiments, a cross-sectional area of the power supply terminal is greater than a cross-sectional area of the auxiliary drive terminal.

In some embodiments, the temperature measurement element is a thermistor or a diode temperature measurement element.

In some embodiments, the power semiconductor module is a surface mount device.

The power semiconductor module provided in one or more embodiments of the present application includes a module body, a temperature measurement element, and a plurality of connection terminals. The module body has a first side surface and a second side surface that are opposite to each other. The temperature measurement element is disposed at the module body and configured to monitor a temperature of the module body. The plurality of connection terminals include a first temperature measurement signal terminal, a second temperature measurement signal terminal, and a plurality of auxiliary drive terminals. The first temperature measurement signal terminal and the second temperature measurement signal terminal are both connected to the temperature measurement element. The plurality of auxiliary drive terminals are all connected to the module body. The first temperature measurement signal terminal is disposed on the first side surface. The second temperature measurement signal terminal is disposed on the first side surface or the second side surface. The plurality of auxiliary drive terminals are disposed on the second side surface. In this way, the first temperature measurement signal terminal is disposed on the first side surface, and the second temperature measurement signal terminal is disposed on the first side surface or the second side surface, such that a relatively large physical isolation is maintained between the first temperature measurement signal terminal and the plurality of auxiliary drive terminals. This facilitates arrangement, by technicians, of the electrical clearance and creepage distance between the temperature measurement signal circuit and the main power circuit, thereby ensuring stable operation of the power semiconductor module under extreme conditions. Accordingly, a risk of failure of the power semiconductor module can be reduced, thereby helping to satisfy safety usage requirements of a user, and further enabling the power semiconductor module to be more suitable for application scenarios with high voltage ratings and high operating frequencies. In addition, when a large physical isolation is maintained between the first temperature measurement signal terminal and the plurality of auxiliary drive terminals, it helps to reduce a risk of arc discharge in high-voltage environments, thereby enabling stable operation of the power semiconductor module under extreme conditions, and further helping to reducing a risk of failure of the power semiconductor module.

### BRIEF DESCRIPTION OF DRAWINGS

To describe the technical solutions of the embodiments of the present application more clearly, the accompanying drawings required for the description of the embodiments are briefly introduced below. It is apparent that the drawings described below show merely some embodiments of the present application. A person skilled in the art may, without creative effort, derive other drawings based on the structures shown in these drawings.
FIG. 1 shows a structural schematic diagram of a power semiconductor module provided in the present application.
FIG. 2 shows a schematic diagram of the circuit principle of the power semiconductor module in FIG. 1.
FIG. 3 shows a structural schematic diagram of the power semiconductor module in FIG. 1 from another perspective.
FIG. 4 shows a structural schematic diagram of another power semiconductor module provided in the present application.
FIG. 5 shows a schematic diagram of the circuit principle of the power semiconductor module in FIG. 4.

Reference numerals
power semiconductor module 10, module body 100, first side surface 110, second side surface 120, top surface 130, bottom surface 140, plastic encapsulation housing 150, power semiconductor element 160, temperature measurement element 200, connection terminal 300, first connection segment 301, second connection segment 302, third connection segment 303, first temperature measurement signal terminal 310, second temperature measurement signal terminal 320, power supply terminal 330, direct current positive terminal 331, direct current negative terminal 332, alternating current terminal 333, spare temperature measurement terminal 340, auxiliary drive terminal 350, first gate signal terminal 351, first source auxiliary drive terminal 352, second source auxiliary drive terminal 353, second gate signal terminal 354

The implementation of the objectives, functional features and advantages of the present application will be further described in conjunction with the embodiments and with reference to the drawings.

### DETAILED DESCRIPTION

To make the objectives, technical solutions, and advantages of the present application clearer, the embodiments of the present application will be described in further detail with reference to the accompanying drawings.

When the following description relates to the drawings, unless otherwise indicated, the same reference numerals in different drawings represent the same or similar elements. The implementations described in the following exemplary embodiments do not represent all implementations consistent with the present application. On the contrary, they are merely examples of devices and methods consistent with some aspects of the present application as detailed in the appended claims.

In the description of the present application, it should be understood that terms such as "first" and "second" are used for descriptive purposes only and cannot be construed as indicating or implying relative importance. A person skilled in the art may understand the specific meanings of the above terms in the present application according to specific circumstances. In addition, in the description of the present application, unless otherwise stated, "a plurality of" means two or more. The term "and/or," which describes an association relationship between associated objects, indicates that there may be three kinds of relationships. For example, A and/or B may indicate the following three situations: A exists alone, both A and B exist, and B exists alone. The character "/" generally indicates that the associated objects before and after it are in an "or" relationship.

Unless otherwise defined, all technical and scientific terms used herein have the same meaning as commonly understood by a person skilled in the art to which the present application belongs. The terms used herein are for the sole purpose of describing specific embodiments and are not intended to limit the present application. The term "and/or" as used herein includes any and all combinations of one or more of the associated listed items.

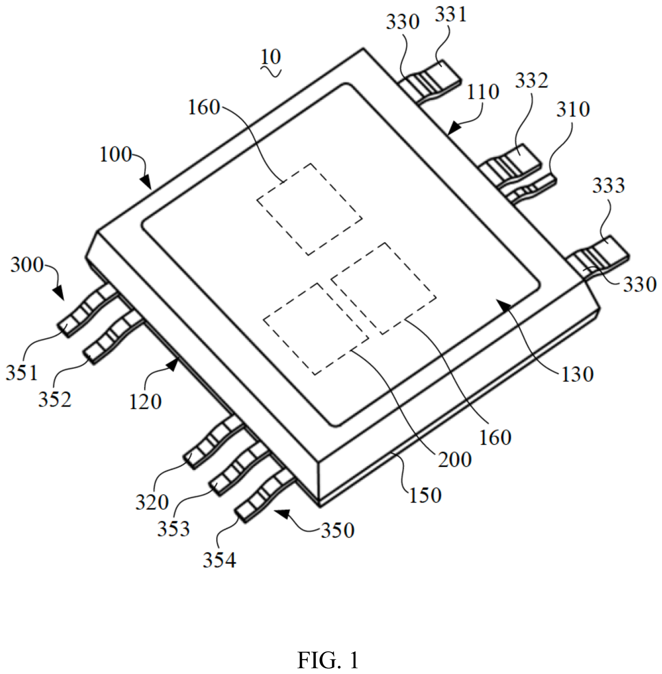

Referring to FIG. 1, the present disclosure provides a power semiconductor module 10 that can be applied in fields such as industrial automation, new energy vehicles, rail transit, and renewable energy power generation. The power semiconductor module 10 can have functions such as power conversion and power management. The power semiconductor module 10 can be mounted on a drive board, such as a PCB, for use.

The power semiconductor module 10 includes a module body 100, a temperature measurement element 200, and a plurality of connection terminals 300. The module body 100 has a first side surface 110 and a second side surface 120 that are opposite to each other. The temperature measurement element 200 is disposed at the module body 100 and configured to monitor a temperature of the module body 100. The plurality of connection terminals 300 include a first temperature measurement signal terminal 310, a second temperature measurement signal terminal 320, and a plurality of auxiliary drive terminals 350. The first temperature measurement signal terminal 310 and the second temperature measurement signal terminal 320 are both connected to the temperature measurement element 200. The plurality of auxiliary drive terminals 350 are all connected to the module body 100. The first temperature measurement signal terminal 310 is disposed on the first side surface 110. The second temperature measurement signal terminal 320 is disposed on the first side surface 110 or the second side surface 120. The plurality of auxiliary drive terminals 350 are disposed on the second side surface 120.

In this way, the first temperature measurement signal terminal 310 is disposed on the first side surface 110, and the second temperature measurement signal terminal 320 is disposed on the first side surface 110 or the second side surface 120, such that a relatively large physical isolation is maintained between the first temperature measurement signal terminal 310 and the plurality of auxiliary drive terminals 350. This facilitates arrangement, by technicians, of the electrical clearance and creepage distance between the temperature measurement signal circuit and the main power circuit, thereby ensuring stable operation of the power semiconductor module 10 under extreme conditions. Accordingly, a risk of failure of the power semiconductor module 10 can be reduced, thereby helping to satisfy safety usage requirements of a user, and further enabling the power semiconductor module 10 to be more suitable for application scenarios with high voltage ratings and high operating frequencies.

In addition, when a large physical isolation is maintained between the first temperature measurement signal terminal 310 and the plurality of auxiliary drive terminals 350, it helps to reduce a risk of arc discharge in high-voltage environments, thereby enabling stable operation of the power semiconductor module 10 under extreme conditions, and further helping to reducing a risk of failure of the power semiconductor module 10.

In some embodiments, the second temperature measurement signal terminal 320 are disposed on the first side surface 110. Alternatively, the second temperature measurement signal terminal 320 may be disposed on the second side surface 120. When the second temperature measurement signal terminal 320 is disposed on the second side surface 120, a large physical distance can also be maintained between the second temperature measurement signal terminal 320 and the plurality of auxiliary drive terminals 350.

In some embodiments, the plurality of connection terminals 300 further include a plurality of power supply terminals 330. Each of the plurality of power supply terminals 330 is connected to the module body 100. The plurality of power supply terminals 330 are disposed on the first side surface 110. The second temperature measurement signal terminal 320 is disposed on the second side surface 120. The first temperature measurement signal terminal 310 is disposed adjacent to one of the plurality of power supply terminals 330. A polarity of the power supply terminal 330 adjacent to the first temperature measurement signal terminal 310 and a polarity of the first temperature measurement signal terminal 310 are both negative.

In this way, the polarity of the power supply terminal 330 adjacent to the first temperature measurement signal terminal 310 and the polarity of the first temperature measurement signal terminal 310 are both negative, such that these two terminals have the same potential, thereby reducing the potential difference therebetween and reducing the electromagnetic interference caused by the potential difference, and further helping to maintain the stability of the temperature monitoring signal of the temperature measurement element 200.

In addition, the first temperature measurement signal terminal 310 is disposed on the first side surface 110, and the second temperature measurement signal terminal 320 is disposed on the second side surface 120, such that a large physical distance is maintained between the first temperature measurement signal terminal and the second temperature measurement signal terminal 320, thereby helping to reduce a risk of failure of the power semiconductor module 10.

Moreover, the plurality of power supply terminals 330 are arranged sequentially at intervals on the first side surface 110 of the module body 100. This facilitates centralized wiring and installation by designers, thereby making the wiring neater and more orderly, reducing line crossing and confusion, and also improving the overall aesthetics and practicality of the module. In addition, misconnections can be effectively prevented through a defined polarity design. For example, during installation, technicians can make correct connections based on the polarity markings on the terminals to avoid electrical faults or damage caused by misconnections.

In some embodiments, the plurality of power supply terminals 330 include a direct current positive terminal 331 as an input terminal, a direct current negative terminal 332 as another input terminal, and an alternating current terminal 333 as an output terminal arranged sequentially at intervals in this order or in the opposite order. A simulation shows that this configuration of the power supply terminals 330 can achieve a loop inductance cancellation effect, effectively reducing the parasitic inductance inside the power semiconductor module 10, thereby enabling better performance of the chip. The first temperature measurement signal terminal 310 is disposed adjacent to the direct current negative terminal 332. The first temperature measurement signal terminal 310 may be disposed between the direct current positive terminal 331 and the direct current negative terminal 332. Alternatively, the first temperature measurement signal terminal 310 may be disposed between the direct current negative terminal 332 and the alternating current terminal 333.

In this way, the first temperature measurement signal terminal 310 is disposed adjacent to the direct current negative terminal 332. Since the direct current negative terminal 332 is usually the reference ground or a low-potential point in the circuit, it helps to reduce the electromagnetic interference received by the module body 100. The adjacent low-potential terminals help to reduce the impact of high-frequency noise on the temperature monitoring signal, thereby ensuring the accuracy and reliability of the temperature data.

In other embodiments, when the alternating current terminal 333 is negative, that is, when the alternating current terminal 333 is at a low potential, the first temperature measurement signal terminal 310 may be adjacent to the alternating current terminal 333, such that the first temperature measurement terminal and the alternating current terminal 333 are both at a low potential.

In some embodiments, the plurality of auxiliary drive terminals 350 include a first source auxiliary drive terminal 352 and a second source auxiliary drive terminal 353. The first source auxiliary drive terminal 352 and the second source auxiliary drive terminal 353 are both connected to the module body 100 and disposed on the second side surface 120. A polarity of the first source auxiliary drive terminal 352 is positive. A polarity of the second source auxiliary drive terminal 353 and a polarity of the second temperature measurement signal terminal 320 are negative. The second temperature measurement signal terminal 320 is close to the second source auxiliary drive terminal 353.

The polarity of the first source auxiliary drive terminal 352 is positive. The first source auxiliary drive terminal 352, the second temperature measurement signal terminal 320, and the second source auxiliary drive terminal 353 are arranged sequentially at intervals. In addition, the second temperature measurement signal terminal 320 is disposed close to the second source auxiliary drive terminal 353.

In this way, the second temperature measurement signal terminal 320 and the second source auxiliary drive terminal 353 are in a low-potential environment, and the second temperature measurement signal terminal 320 is isolated from the first source auxiliary drive terminal 352 by a certain physical distance, thereby helping to reduce the impact of external electromagnetic interference on the second temperature measurement signal terminal 320.

In addition, the potential of the second temperature measurement signal terminal 320 is low (close to ground potential), thereby helping to reduce the impact of commonmode noise on the measurement accuracy of the second temperature measurement signal terminal 320.

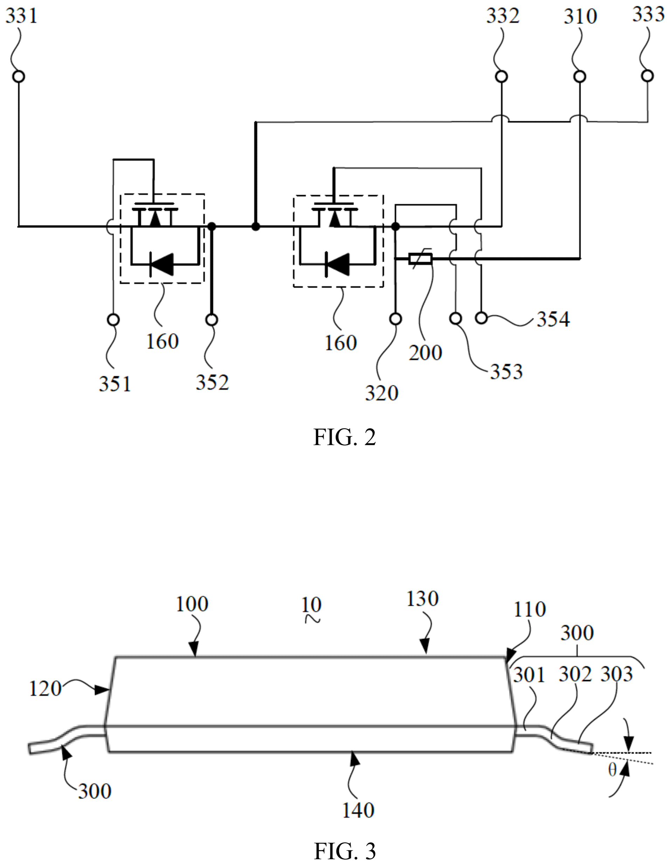

FIG. 2 is a schematic diagram of the circuit principle of the power semiconductor module 10 in FIG. 1. The description is mainly provided by taking, as an example, a configuration in which two switching transistors 160 and one temperature measurement element 200 are provided in the power semiconductor module 10. The temperature measurement element 200 may be a diode. The two switching transistors 160 form a half-bridge circuit. The temperature measurement element 200 is disposed adjacent to one of the switching transistors 160. The temperature measurement element 200 can measure the temperature of one of the switching transistors 160. The plurality of auxiliary drive terminals 350 are connected to the corresponding switching transistors 160. The polarity of the first source auxiliary drive terminal 352 is positive. The plurality of auxiliary drive terminals 350 further include a first gate signal terminal 351 and a second gate signal terminal 354. A polarity of the first gate signal terminal 351 and a polarity of the second gate signal terminal 354 are both negative. The first gate signal terminal 351 and the second gate signal terminal 354 are both disposed on the second side surface 120. The first gate signal terminal 351, the first source auxiliary drive terminal 352, the second temperature measurement signal terminal 320, the second source auxiliary drive terminal 353, and the second gate signal terminal 354 are arranged sequentially at intervals. A distance between the first source auxiliary drive terminal 352 and the second temperature measurement signal terminal 320 is greater than a distance between any other two adjacent connection terminals 300 disposed on the second side surface 120.

In this way, since the first source auxiliary drive terminal 352 is at a high potential and the second temperature measurement signal terminal 320 is at a low potential, a large physical distance therebetween can increase the electrical clearance.

In addition, the first source auxiliary drive terminal 352, as a high-potential point, is prone to become a source of electromagnetic interference. The large distance between the first source auxiliary drive terminal 352 and the second temperature measurement terminal helps to reduce the impact of the first source auxiliary drive terminal 352 on the temperature monitoring signal, thereby ensuring the accuracy and stability of temperature measurement.

FIG. 3 is a structural schematic diagram of the power semiconductor module shown in FIG. 1 from another perspective. As shown in FIG. 3, the module body 100 includes a bottom surface 140 and a top surface 130 that are opposite to each other. The bottom surface 140 and the top surface 130 are each disposed between the first side surface 110 and the second side surface 120. Each of the plurality of connection terminals 300 includes a first connection segment 301, a second connection segment 302, and a third connection segment 303 connected sequentially. The module body 100 is connected to the first connection segment 301. The third connection segment 303 extends obliquely from the second connection segment 302 toward a plane in which the bottom surface 140 is disposed in a direction away from the first connection segment 301.

In this way, when the power semiconductor module 10 is soldered onto a drive board, the inclined third connection segment 303 helps to guide the solder to flow evenly to a solder joint between the third connection segment 303 and the drive board during soldering. Accordingly, the solder can better cover the entire soldering area (the solder joint between the third connection segment 303 and the drive board), thereby enabling the power semiconductor module 10 to form a reliable electrical connection with the drive board. In some embodiments, at an end portion of the third connection segment 303 of each connection terminal 300, a soldering margin of 0.05-0.15 mm is predefined between the end portion of the third connection segment 303 and the plastic encapsulation housing 150, eliminating the impact of contamination on the soldering surface caused by the user and ensuring a minimum thickness of the solder layer.

In addition, in practical applications, there may be vibration or mechanical shock between the power semiconductor module 10 and the drive board. The inclined third connection segment 303 can better disperse the mechanical stress on the power semiconductor module 10, thereby helping to reduce a risk of failure of the solder joints between the power semiconductor module 10 and the drive board.

In some embodiments, an angle θ between the third connection segment 303 and the plane in which the bottom surface 140 is disposed is not less than 4 degrees and not greater than 7 degrees. The angle θ between the third connection segment 303 and the plane in which the bottom surface 140 is disposed may be 4 degrees, 4.5 degrees, 5 degrees, 5.5 degrees, 6 degrees, 6.5 degrees, or 7 degrees.

In this way, the angle θ formed between the third connection segment 303 and the plane in which the bottom surface 140 is disposed is in the range of 4 degrees to 7 degrees. An appropriate angle helps to guide a solder flow to a correct soldering position and avoids excessive solder accumulation or bridging, thereby enabling each solder joint between the power semiconductor module 10 and the drive board to obtain a proper amount of solder, thereby further improving soldering quality and reliability.

In addition, the angle θ between the third connection segment 303 and the plane in which the bottom surface 140 is disposed is in the range of 4 degrees to 7 degrees, such that when the connection terminal 300 is subjected to external mechanical stress, the stress can be more evenly distributed on the connection terminal 300 rather than concentrated at the solder joint. This reduces the risk of cracking or detachment of the solder joint caused by localized stress concentration. Furthermore, the third connection segment 303 has a suitable inclination angle to help the power semiconductor module 10 maintain structural stability when subjected to vibration or impact.

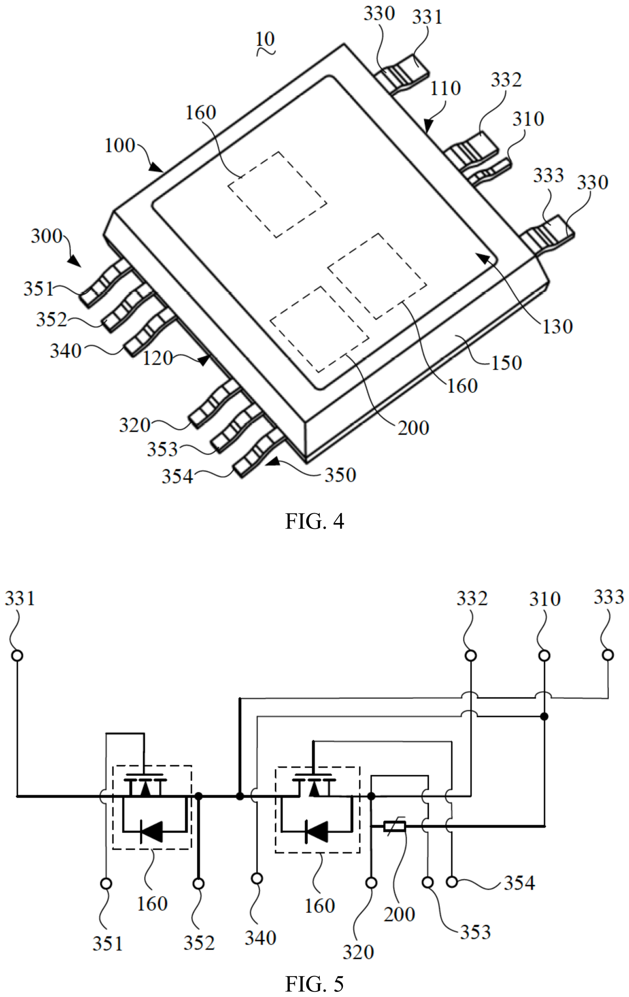

Referring now to FIG. 4, FIG. 4 is a structural schematic diagram of another power semiconductor module provided in the present application. The power semiconductor module shown in FIG. 4 has many features in common with that in FIGs. 1-3, a description of which will not be repeated here. The following description will focus primarily on parts of the power semiconductor module shown in FIG. 4 that are not shown in FIGs. 1-3. As shown in FIG. 4, in some embodiments, the plurality of connection terminals 300 further include a spare temperature measurement terminal 340 disposed on the second side surface 120. The temperature measurement element 200 is connected to the second temperature measurement signal terminal 320. The temperature measurement element 200 is also connected to the first temperature measurement signal terminal 310 or the spare temperature measurement terminal 340. During the same time period, the temperature measurement element 200 is connected to the second temperature measurement signal terminal 320 and the first temperature measurement signal terminal 310; or, the temperature measurement element 200 is connected to the second temperature measurement signal terminal 320 and the spare temperature measurement terminal 340. The spare temperature measurement terminal 340 may be connected to the temperature measurement element 200 through internal activation or external wiring.

In this way, the power semiconductor module 10 incorporates a spare temperature measurement terminal 340 that can immediately take over the temperature monitoring task when the first temperature measurement signal terminal 310 fails or is damaged, enabling the power semiconductor module 10 to operate normally.

In addition, the power semiconductor module 10 additionally incorporates the spare temperature measurement terminal 340, enabling users to perform flexible configuration according to different voltage rating requirements, thereby helping to meet the voltage rating requirements of different users.

In some embodiments, a distance between the spare temperature measurement terminal 340 and the second temperature measurement signal terminal 320 is smaller than a distance between the first temperature measurement signal terminal 310 and the second temperature measurement signal terminal 320. In this way, in high-voltage application scenarios, the user can choose to use the first temperature measurement signal terminal 310 and the second temperature measurement signal terminal 320 with higher electrical isolation performance. In low-voltage application scenarios, the user can use the spare temperature measurement terminal 340 and the second temperature measurement signal terminal 320, such that the drive board connected to the power semiconductor module 10 can be easily wired.

FIG. 5 is a schematic diagram of the circuit principle of the power semiconductor module 10 in FIG. 4. The power semiconductor module 10 shown in FIG. 5 has many features in common with that in FIG. 2, a description of which will not be repeated here. The following description will focus primarily on parts of the power semiconductor module 10 shown in FIG. 5 that are not shown in FIG. 2. As shown in the figure, the first gate signal terminal 351, the first source auxiliary drive terminal 352, the second temperature measurement signal terminal 320, the spare temperature measurement terminal 340, the second source auxiliary drive terminal 353, and the second gate signal terminal 354 are arranged sequentially at intervals. In this way, when the temperature measurement element 200 is connected to the first temperature measurement signal terminal 310 and the second temperature measurement signal terminal 320, the spare temperature measurement terminal 340 can serve as a spacer to isolate the first source auxiliary drive terminal 352 from the second temperature measurement signal terminal 320.

In addition to the above descriptions, the power semiconductor module of the present disclosure may further have other features, improvements, and modifications.

For example, in some embodiments, the plurality of connection terminals 300 further include a plurality of power supply terminals 330 disposed on the first side surface 110 and a plurality of auxiliary drive terminals 350 disposed on the second side surface 120. In this way, the power semiconductor module 10 includes the power supply terminals 330 and the auxiliary drive terminals 350 disposed on different side surfaces (the first side surface 110 and the second side surface 120) of the module body 100, respectively. This helps to improve the electrical isolation performance of the power semiconductor module 10, thereby helping to reduce a risk of arc discharge, and further helping to improve the safety and reliability of the power semiconductor module 10.

In addition, the power supply terminals 330 generally involve high-frequency noise and transient currents. Different functional terminals are arranged separately in the power semiconductor module 10, which helps to reduce the impact of electromagnetic interference on the auxiliary drive terminals 350, thereby helping to ensure the stability and accuracy of signal transmission of the auxiliary drive terminals 350.

Moreover, when different functional terminals are arranged separately in the power semiconductor module 10, the wiring process with the drive board of the power semiconductor module 10 can be simplified, thereby helping to reduce line crossing and confusion. In addition, the power supply terminals 330 and the auxiliary drive terminals 350 are disposed on different side surfaces of the module body 100, which can make the overall structure of the power semiconductor module 10 more reasonable and compact. This helps to enhance the mechanical strength and stability of the power semiconductor module 10, and thus helps the power semiconductor module 10 to better resist external vibration and impact when mounted on the drive board, thereby enabling the power semiconductor module 10 to operate stably for a long time in harsh working environments.

In some embodiments, a cross-sectional area of the power supply terminal 330 is greater than a cross-sectional area of the auxiliary drive terminal 350. In this way, the cross-sectional area of the power supply terminal 330 is larger, such that the power supply terminal 330 can carry a larger current without overheating or being damaged. In addition, the power supply terminal 330 has a larger cross-sectional area, which helps to reduce the resistance when the current passes through the power supply terminal 330. This helps to reduce the energy loss caused by the resistance of the power supply terminal 330, and helps to reduce the heat generation of the power supply terminal 330, thereby helping to prolong the service life of the power supply terminal 330.

In addition, the cross-sectional area of the auxiliary drive terminal 350 is smaller, such that a smaller space is occupied by the auxiliary drive terminal 350, thereby enabling the design of the power semiconductor module 10 to be more compact. Moreover, the smaller size of auxiliary drive terminal 350 reduces the amount of manufacturing material required for the auxiliary drive terminal 350, thereby helping to significantly reduce the material cost of the power semiconductor module 10 in mass production.

In some embodiments, there may be a variety of options for the temperature measurement element 200. For example, the temperature measurement element 200 may be a thermistor. The resistance value of the temperature measurement element 200 may change with temperature. When the temperature of the module body 100 changes, the temperature change of the module body 100 can be inferred by measuring the resistance change of the temperature measurement element 200. The temperature measurement element 200 has high sensitivity. This helps to provide accurate temperature measurement of the module body 100 over a wide temperature range by the temperature measurement element 200. In addition, the resistance value of a thermistor changes significantly with the temperature within a certain temperature range, enabling the temperature measurement element 200 to quickly respond to the temperature change of the module body 100.

Furthermore, for example, the temperature measurement element 200 may be a diode temperature measurement element, such that the temperature measurement element 200 has a good linear relationship between the forward voltage and the temperature within a specific temperature range. By monitoring the positive voltage change of the temperature measurement element 200, the temperature change of the module body 100 can be inferred, thereby enabling the temperature measurement element 200 to monitor the temperature of the module body 100 more accurately and quickly. In addition, the temperature measurement element 200 also has a defined polarity, that is, the temperature measurement element 200 is turned on when forward biased and turned off when reverse biased. If the temperature measurement element 200 is incorrectly reverse-connected (that is, the positive terminal is connected to the negative power supply and the negative terminal is connected to the positive power supply), the temperature measurement element 200 will not be turned on, thereby preventing the temperature measurement element 200 from operating normally, and thus enabling the temperature measurement element 200 to have the function of preventing incorrect connection.

In some embodiments, the power semiconductor module 10 is a surface mount device (SMD), such that the power semiconductor module 10 can be produced by an automated production line, thereby significantly improving production efficiency.

In some embodiments, the module body 100 may include a plastic encapsulation housing 150 and a power semiconductor element 160. The power semiconductor element 160 and the temperature measurement element 200 are both disposed in the plastic encapsulation housing 150.

As such, the plastic encapsulation housing 150 provides good electrical insulation protection against arc discharge or short circuit phenomena between the power semiconductor element 160 and the temperature measurement element 200 and other external components or environments. In addition, the plastic encapsulation housing 150 generally has good moisture and water resistance, effectively preventing moisture and water from entering the interior of the plastic encapsulation housing 150 and avoiding electrical faults or corrosion problems caused by humidity.

In addition, the plastic encapsulation housing 150 provides physical protection for the internal power semiconductor element 160 and temperature measurement element 200 from mechanical shock, vibration or other external forces during transportation, installation and use of the power semiconductor element 160 and temperature measurement element 200, thereby helping to prolong the service life of the power semiconductor module 10.

Moreover, the plastic encapsulation housing 150 generally has certain thermal conductivity. This can help to conduct the heat generated by the power semiconductor element 160 to the surface of the plastic encapsulation housing 150 and then dissipate it through a heat sink or other heat dissipation device, thereby avoiding the formation of local hot spots in the power semiconductor module 10.

In some embodiments, there may be a variety of options for the manufacturing materials of the plastic encapsulation housing 150. For example, the plastic encapsulation housing 150 may be manufactured using epoxy resin, such that the plastic encapsulation housing 150 has good electrical insulation properties, mechanical strength, and chemical corrosion resistance. Furthermore, for example, the plastic encapsulation housing 150 may be manufactured using polyimide, such that the plastic encapsulation housing 150 has good high-temperature resistance and mechanical strength.

In some embodiments, the top surface 130 of the plastic encapsulation housing 150 may be in direct contact with a heat sink. The heat generated by the power semiconductor element 160 may be transferred to the top surface 130 of the plastic encapsulation housing 150 and then transferred from the top surface 130 of the plastic encapsulation housing 150 to the heat sink, such that an efficient heat conduction path is formed between the power semiconductor module 10 and the heat sink.

In some embodiments, the top surface 130 of the plastic encapsulation housing 150 may include metal, such as copper.

In some embodiments, the power semiconductor element 160 may be a MOSFET (Metal Oxide Semiconductor Field Effect Transistor), such that the power semiconductor module 10 has functions such as circuit switching and current control. The number of power semiconductor elements 160 may be determined according to actual needs.

In the accompanying drawings of the present embodiment, the same or similar reference numerals correspond to the same or similar components. In the description of the present application, it should be understood that terms such as "upper," "lower," "left," "right," *etc.,* which indicate the orientation or positional relationship, are based on the orientation or positional relationship shown in the drawings. These terms are only for the convenience of describing the present application and simplifying the description, and do not indicate or imply that the device or element referred to must have a specific orientation or be constructed and operated in a specific orientation. Therefore, the terms used to describe positional relationships in the drawings are only for illustrative purposes and should not be construed as limiting the present application. For a person skilled in the art, the specific meaning of the above terms can be understood according to the specific circumstances.

The above are merely embodiments of the present application and are not intended to limit the present application. Any modifications, equivalent substitutions, and improvements made within the spirit and principles of the present application should be included within the protection scope of the present application.

## Claims

1. A power semiconductor module comprising:
a module body having a first side surface and a second side surface that are opposite to each other;
a temperature measurement element disposed at the module body and configured to monitor a temperature of the module body; and
a plurality of connection terminals comprising a first temperature measurement signal terminal, a second temperature measurement signal terminal, and a plurality of auxiliary drive terminals, wherein
the first temperature measurement signal terminal and the second temperature measurement signal terminal are connected to the temperature measurement element,
the plurality of auxiliary drive terminals are connected to the module body,
the first temperature measurement signal terminal is disposed on the first side surface,
the second temperature measurement signal terminal is disposed on the first side surface or the second side surface, and
the plurality of auxiliary drive terminals are disposed on the second side surface.

2. The power semiconductor module according to claim 1, wherein
the plurality of connection terminals further comprise a plurality of power supply terminals, each of the power supply terminals is connected to the module body,
the plurality of power supply terminals are disposed on the first side surface,
the second temperature measurement signal terminal is disposed on the second side surface,
the first temperature measurement signal terminal is disposed adjacent to one of the plurality of power supply terminals, and
a polarity of the power supply terminal adjacent to the first temperature measurement signal terminal and a polarity of the first temperature measurement signal terminal are negative.

3. The power semiconductor module according to claim 2, wherein
the plurality of power supply terminals comprise a direct current positive terminal, a direct current negative terminal, and an alternating current terminal arranged sequentially at intervals, and
the first temperature measurement signal terminal is disposed adjacent to the direct current negative terminal.

4. The power semiconductor module according to claim 2, wherein
the plurality of auxiliary drive terminals comprise a first source auxiliary drive terminal and a second source auxiliary drive terminal,
the first source auxiliary drive terminal and the second source auxiliary drive terminal are connected to the module body and disposed on the second side surface,
a polarity of the first source auxiliary drive terminal is positive,
a polarity of the second source auxiliary drive terminal and a polarity of the second temperature measurement signal terminal are negative, and
the second temperature measurement signal terminal is disposed close to the second source auxiliary drive terminal.

5. The power semiconductor module according to claim 1, wherein
the plurality of connection terminals further comprise a spare temperature measurement terminal disposed on the second side surface,
the temperature measurement element is connected to the second temperature measurement signal terminal, and
the temperature measurement element is connected to the first temperature measurement signal terminal or the spare temperature measurement terminal.

6. The power semiconductor module according to claim 1, wherein
the module body comprises a bottom surface and a top surface that are opposite to each other,
the bottom surface and the top surface are each disposed between the first side surface and the second side surface, and
each of the plurality of connection terminals comprises a first connection segment, a second connection segment, and a third connection segment connected sequentially, wherein the module body is connected to the first connection segment, and the third connection segment extends obliquely from the second connection segment toward a plane in which the bottom surface is disposed in a direction away from the first connection segment.

7. The power semiconductor module according to claim 6, wherein an angle between the third connection segment and the plane in which the bottom surface is disposed is not less than 4 degrees and not greater than 7 degrees.

8. The power semiconductor module according to claim 1, wherein the plurality of connection terminals further comprise a plurality of power supply terminals disposed on the first side surface.

9. The power semiconductor module according to claim 8, wherein a cross-sectional area of the power supply terminal is greater than a cross-sectional area of the auxiliary drive terminal.

10. The power semiconductor module according to any one of claims 1 to 9, wherein
the temperature measurement element is a thermistor or a diode temperature measurement element, and/or
the power semiconductor module is a surface mount device.
